# FASCICULE DE BREVET EUROPEEN

(11) **EP 1 094 594 B1**
(45) Date de publication et mention de la délivrance du brevet: **21.12.2011**
(21) Numéro de dépôt: 00402859.3
(22) Date de dépôt: 16.10.2000
(51) Int. Cl.: H02P 3/04, B66D 1/48

(54) **Variateur pour la commande d'un moteur électrique de levage**
Umrichter zur Regelung eines elektrischen Hubmotors
Converter to control an electric hoisting motor

(30) Priorité: 18.10.1999 FR 9912957
(43) Date de publication de la demande: 25.04.2001
(73) Titulaire: MOTEURS LEROY-SOMER, 16000 Angoulême (FR); POTAIN, 69132 Ecully (FR)
(72) Inventeur: Andrejak, Jean-Marie, 16710 Saint Yrieix (FR); Rosseel, Bruno, 16000 Angouleme (FR)
(74) Mandataire: Tanty, François

(56) Documents cités:
- DE-A- 4 038 981
- US-A- 5 331 267
- US-A- 5 818 185
- PATENT ABSTRACTS OF JAPAN vol. 1999, no. 14, 22 décembre 1999 (1999-12-22) & JP 11 246184 A (TOYO ELECTRIC MFG CO LTD), 14 septembre 1999 (1999-09-14)
- PATENT ABSTRACTS OF JAPAN vol. 004, no. 028 (E-001), 8 mars 1980 (1980-03-08) & JP 55 002377 A (HITACHI LTD), 9 janvier 1980 (1980-01-09)

## Description

La présente invention concerne un variateur pour la commande d'un moteur électrique de levage, en particulier un moteur destiné à équiper une grue.

Les variateurs connus (DE-A-40 38981) comportent des moyens de contrôle agencés pour mesurer le couple du moteur au début de son fonctionnement afin de déterminer d'une part le poids de la charge et d'autre part la vitesse limite admissible compte tenu de la puissance disponible.

Ces variateurs n'offrent pas entière satisfaction, car le couple du moteur est susceptible d'être mesuré alors que le câble de levage n'est pas tendu ou la charge incomplètement levée, auquel cas les moyens de contrôle autorisent une vitesse limite supérieure à celle admissible réellement.

Il en résulte que lorsque le câble se tend ou que la charge est entièrement levée, la puissance requise pour le fonctionnement du moteur devient excessive, ce qui provoque le déclenchement d'un disjoncteur thermique et l'arrêt des opérations de levage.

Par ailleurs, le couple du moteur est susceptible de varier suite à l'augmentation du rayon d'enroulement sur le tambour.

Ainsi, à charge et à vitesse constantes, le couple mesuré en début d'enroulement est plus faible qu'en fin d'enroulement et la puissance à fournir au moteur peut alors excéder la puissance maximale disponible si le moteur tourne à une vitesse supérieure à sa vitesse nominale.

Enfin, les grues sont munies d'un anneau de charge qui se déforme en fonction du poids de la charge et d'un contact électrique associé, prévu pour qu'en cas de déformation de l'anneau au-delà d'une limite prédéterminée, le fonctionnement du moteur soit interrompu.

Pour étalonner l'anneau de charge, la pratique usuelle consiste à accrocher diverses charges étalon au crochet de la grue et à vérifier que le contact électrique ne change d'état qu'à partir d'un poids prédéterminé.

Le poids des charges étalon utilisées n'est toutefois pas connu avec précision et il existe un besoin pour simplifier les opérations d'étalonnage de l'anneau de charge.

L'invention vise à remédier à l'un au moins des inconvénients précités.

Le nouveau variateur selon l'invention est du type comportant des moyens de commande pour fixer une vitesse de consigne et des moyens de contrôle permettant de mesurer le couple et la vitesse de rotation du moteur, ces moyens de contrôle étant agencés pour déterminer, à partir du couple mesuré, la vitesse limite de rotation du moteur, de manière à ne pas dépasser une puissance maximale disponible.

Ce variateur se caractérise par le fait que les moyens de contrôle sont agencés pour effectuer, lorsque la vitesse de consigne est supérieure à la vitesse de rotation nominale du moteur, des mesures successives du couple, et en cas de variation du couple entre deux mesures successives supérieure à un seuil donné, déterminer la nouvelle vitesse limite.

Grâce à l'invention, on s'assure que la puissance requise pour le fonctionnement du moteur reste inférieure ou égale à la puissance maximale du variateur et l'on évite le déclenchement d'un disjoncteur thermique.

Il est ainsi remédié à une augmentation excessive du couple du moteur due à l'augmentation du rayon d'enroulement du câble sur le tambour.

Avantageusement, les moyens de contrôles sont agencés pour permettre d'étalonner l'anneau de charge en commandant directement le couple du moteur.

Ainsi, il n'est plus nécessaire d'accrocher, comme dans l'état de la technique, des charges étalon de poids croissant au câble de levage.

L'opération d'étalonnage de l'anneau de charge est donc simplifiée.

Dans une réalisation particulière, une mesure initiale du couple est effectuée en maintenant le moteur à sa vitesse nominale pendant une durée prédéterminée.

Toujours dans une réalisation particulière, des mesures du couple sont effectuées à chaque fois que la vitesse de rotation reste sensiblement constante au-dessus de la vitesse nominale pendant une durée prédéterminée, de préférence une durée de deux à quatre secondes, de préférence encore trois secondes environ.

On s'affranchit ainsi des variations de tension du câble dues à son élasticité notamment.

Il est préférable pour la même raison que lors d'une mesure du couple, les moyens de contrôle effectuent la moyenne, pendant une durée prédéterminée, de préférence comprise entre une et trois secondes, de préférence encore voisine de deux secondes environ, du couple instantané.

Avantageusement, la nouvelle vitesse limite est calculée dès lors que la variation relative du couple entre deux mesures successives excède 10 %, de préférence 15 %.

De préférence, le couple du moteur est déterminé par analyse vectorielle.

L'invention a encore pour objet un ensemble comprenant un variateur et un moteur à frein électromagnétique, le variateur étant agencé pour débloquer le frein à chaque lancement du moteur.

L'invention a encore pour objet un procédé pour étalonner un anneau de charge comportant un contact électrique changeant d'état en cas de dépassement d'un poids prédéterminé, au moyen d'un variateur, caractérisé par le fait qu'il comporte les étapes consistant à :
- accrocher un crochet de grue à un peson lui-même relié à un point fixe,
- augmenter le couple du moteur de manière à provoquer le changement d'état de l'anneau de charge.

L'invention a encore pour objet un procédé de contrôle de la vitesse d'un moteur de levage, caractérisé par le fait qu'il comporte les étapes consistant à :
- effectuer une mesure initiale du couple en stabilisant la vitesse du moteur à sa vitesse nominale,
- déterminer la vitesse limite permettant de ne pas excéder une puissance maximale donnée,
- en cas d'apparition d'une vitesse sensiblement constante au-dessus de la vitesse nominale pendant une durée prédéterminée, mesurer le couple et calculer la variation relative du couple par rapport à la mesure précédente,
- en cas de variation relative dépassant un seuil prédéterminé, calculer la nouvelle vitesse limite.

D'autres caractéristiques et avantages de la présente invention ressortiront à la lecture de la description détaillée qui va suivre, d'un exemple de réalisation non limitatif, et à l'examen du dessin annexé sur lequel :
- la figure 1 représente de manière schématique un ensemble constitué d'un variateur et d'un moteur de levage,
- la figure 2 est un schéma illustrant différentes étapes du fonctionnement du variateur,
- la figure 3 illustre le fonctionnement à puissance constante,
- la figure 4 illustre le principe de la mesure vectorielle du couple,
- les figures 5 et 6 sont des schémas illustrant différentes étapes du fonctionnement du variateur,
- la figure 7 illustre l'évolution de la vitesse lors de l'accélération du moteur vers une vitesse de consigne supérieure à sa vitesse nominale, et
- la figure 8 illustre l'évolution de la vitesse limite en fonction du couple mesuré.

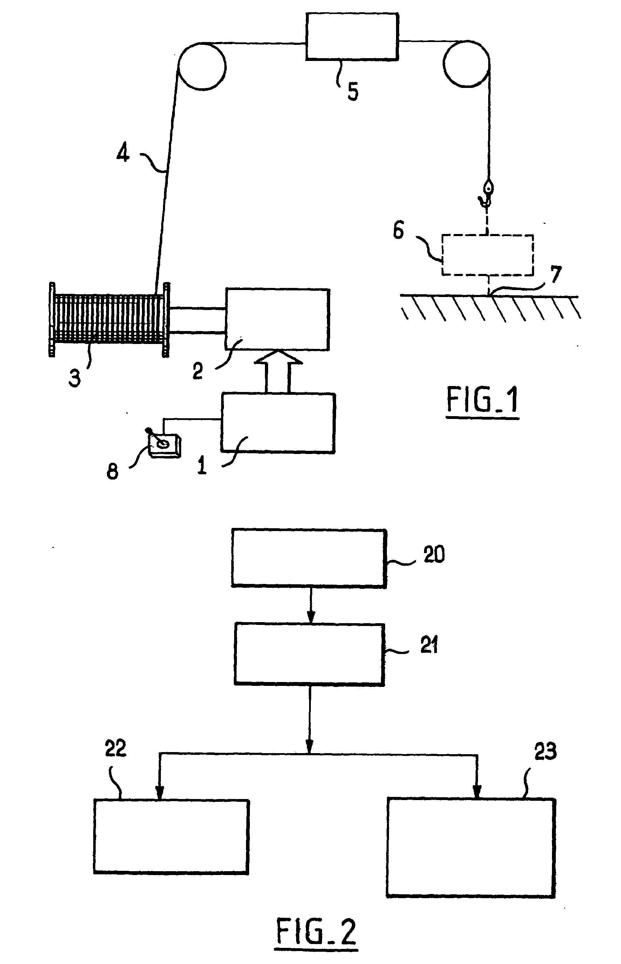

On a représenté très schématiquement sur la figure 1 un variateur 1 selon l'invention, alimentant un moteur réducteur à frein électromagnétique 2, ce moteur étant accouplé à un tambour 3 sur lequel s'enroule le câble de levage 4 d'une grue.

Un anneau de charge 5, dont la fonction sera expliquée plus loin, permet d'arrêter le fonctionnement du moteur 2 en cas de dépassement de la charge maximale autorisée.

Lors de l'utilisation normale de la grue, le câble 4 est accroché à la charge que l'on désire soulever.

Le variateur 1 est agencé pour fonctionner selon deux modes différents, comme cela va maintenant être décrit, en référence à la figure 2.

A l'étape 20 de mise sous tension, le variateur demande à l'opérateur d'entrer une instruction concernant le mode de fonctionnement choisi.

Cette instruction est analysée à l'étape 21, et le variateur 1 passe soit dans un mode de fonctionnement à puissance constante schématisé par le bloc 22, soit dans un mode de fonctionnement à commande de couple schématisé par le bloc 23.

Le mode de fonctionnement à puissance constante est choisi lors de l'utilisation normale de la grue, tandis que le mode de fonctionnement à commande de couple est utilisé pour l'étalonnage de l'anneau de charge 5, comme cela sera expliqué plus loin.

On suppose dans la suite que le mode de fonctionnement à puissance constante a été sélectionné.

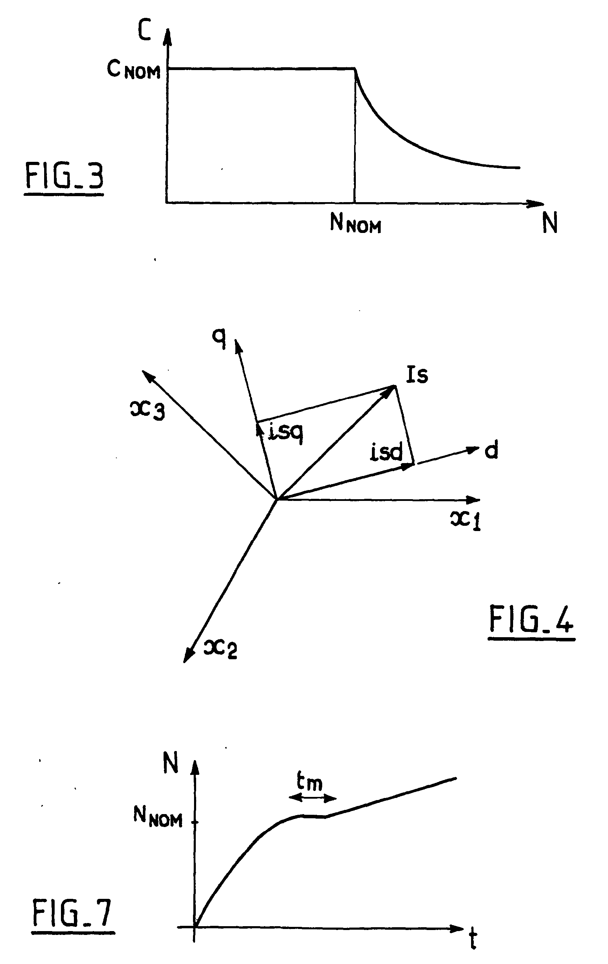

La figure 3 représente le couple admissible en fonction de la vitesse de rotation du moteur.

Le couple C du moteur est inférieur ou égal à une valeur nominale C_{NOM} sur une plage de vitesse comprise entre 0 et la vitesse nominale N_{NOM} du moteur, comme on le voit sur la figure 3. Ensuite le couple maximal admissible C diminue lorsque la vitesse N augmente, le produit du couple par la vitesse étant constant.

La vitesse nominale est choisie égale à 1 350 tr/mn dans l'exemple de réalisation décrit.

Le variateur comporte des moyens de commande, non représentés en détail dans un souci de clarté, comprenant un levier 8 par exemple, permettant à l'opérateur d'entrer une vitesse de consigne.

Lorsque la vitesse de consigne fixée par l'opérateur est inférieure à la vitesse nominale N_{NOM}, aucune mesure du couple du moteur n'est nécessaire car le moteur ne risque pas de dépasser la puissance maximale disponible, le couple étant au plus égal au couple nominal C_{NOM}.

Le variateur 1 est agencé pour effectuer des mesures successives du couple lorsque la vitesse de consigne fixée par l'opérateur est supérieure à la vitesse nominale N_{NOM}, afin de plafonner le cas échéant la vitesse limite à une valeur prédéterminée, inférieure à la vitesse de consigne et choisie de manière à ce que le produit du couple par la vitesse de rotation reste inférieur au produit C_{NOM}. N_{NOM}.

Le modèle mathématique du moteur est mémorisé dans le variateur 1, de sorte que le variateur 1 peut déterminer, en fonction du couple mesuré, la vitesse limite permettant de ne pas excéder la puissance disponible.

Le couple du moteur est déterminé, de façon connue en soi, par un calcul vectoriel dont le principe est illustré sur la figure 4.

Dans l'exemple de réalisation décrit, le moteur 2 est triphasé et les courants de chacune des phases sont des grandeurs sinusoïdales.

Le principe de la mesure vectorielle est de projeter le vecteur courant I_{S} dans un repère tournant.

Ce vecteur courant I_{S} correspond à la somme vectorielle des vecteurs courant x₁, x₂ et x₃ de chacune des phases.

Les composantes du vecteur courant I_{S} sont mesurées dans un repère d'axes d et q tournant par rapport aux vecteurs x₁, x₂ et x₃ à la même fréquence que le vecteur courant.

Le repère d, q est choisi de manière à ce que les composantes is_{d} et is_{q} du vecteur courant Iₛ, projetées sur les axes d et q, soient respectivement proportionnelles au flux et au couple.

C'est donc la grandeur is_{d} qui donne l'image du couple et de la charge.

Dans le mode de fonctionnement à puissance constante, le variateur opère de la façon suivante.

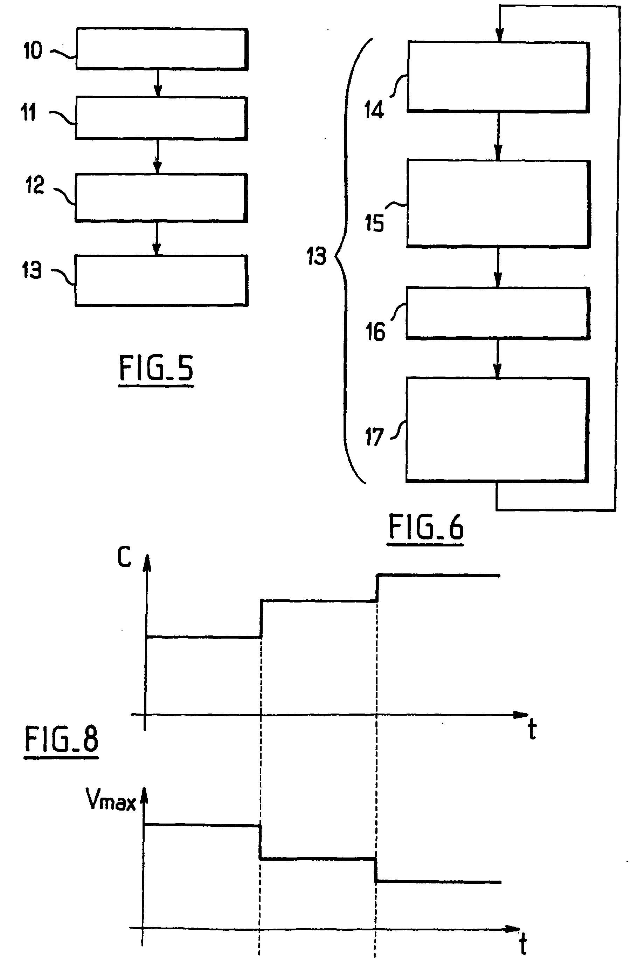

Au repos, le frein électromagnétique du moteur 2 est bloqué, ce qui correspond à l'étape 10 sur la figure 5.

Après que l'opérateur ait manoeuvré les moyens de commande 8 de façon à entrer une vitesse de consigne non nulle, le variateur 1 commande, à l'étape 11, le déblocage du frein électromagnétique et détermine si la vitesse de consigne demandée est supérieure ou non à la vitesse nominale N_{NOM}.

Tant que la vitesse de consigne reste inférieure à la vitesse nominale, ce qui correspond à l'étape 12, le variateur contrôle le fonctionnement du moteur sans effectuer de mesure de couple.

Lorsque la vitesse de consigne est supérieure à la vitesse nominale et que la vitesse du moteur atteint la vitesse nominale N_{NOM}, le variateur passe dans un mode de fonctionnement schématisé par le bloc 13 dans lequel il effectue des mesures successives du couple du moteur afin de s'assurer que la puissance demandée n'est pas supérieure à la puissance disponible.

Les mesures successives du couple s'effectuent de la manière illustrée sur la figure 6.

La première mesure de couple est effectuée alors que le moteur 2 atteint sa vitesse nominale, la vitesse de consigne étant supposée ici supérieure à ladite vitesse nominale.

On a représenté sur la figure 7 la vitesse du moteur 2 en fonction du temps.

Le variateur stabilise la vitesse du moteur 2 à sa vitesse nominale pendant une durée prédéterminée tₘ, égale à 500 millisecondes dans l'exemple de réalisation décrit, et détermine par calcul vectoriel le couple, comme expliqué plus haut.

Une fois le couple mesuré, le variateur 1 détermine la vitesse limite à ne pas dépasser en fonction de la puissance disponible.

Si la vitesse de consigne est inférieure à cette vitesse limite, le variateur accélère le moteur jusqu'à ce que ce dernier atteigne la vitesse de consigne.

Si par contre la vitesse de consigne est supérieure à la vitesse limite calculée plus haut, la vitesse du moteur croît et se stabilise à la vitesse limite sans atteindre la vitesse de consigne.

Une fois la première mesure du couple effectuée, le variateur 1 détecte, à l'étape 14, l'atteinte d'un régime permanent d'une durée prédéterminée, égale à trois secondes dans l'exemple décrit.

Lorsque ce régime permanent est atteint, ce qui correspond à une vitesse sensiblement constante du moteur, le variateur 1 lance, à l'étape 15, une nouvelle mesure du couple et calcule la différence entre le couple nouvellement mesuré et celui mesuré précédemment.

Le variateur calcule, à l'étape 16, la valeur moyenne de cette différence sur une durée prédéterminée, par exemple deux secondes.

Lorsque la valeur moyenne ainsi calculée correspond à une variation relative du couple excédant un seuil déterminé, par exemple 15 %, le variateur calcule, à l'étape 17, la nouvelle vitesse limite à ne pas dépasser, à partir du couple dernièrement mesuré, puis retourne à l'étape 14.

Ainsi, dans le cas où le couple augmente en fonction du temps de la manière illustrée sur la figure 8, suite par exemple au relèvement progressif d'une charge, la vitesse limite Nₘₐₓ fixée par le variateur décroît de manière correspondante, ce qui permet de ne pas dépasser la puissance maximale disponible.

Dans l'exemple de réalisation décrit, le variateur peut être placé, comme expliqué plus haut, dans un mode de fonctionnement à commande du couple.

Ce mode de fonctionnement est utilisé pour étalonner l'anneau de charge 5 en procédant de la façon suivante.

Le câble de levage 4 est, comme illustré en trait discontinu sur la figure 1, accroché à un peson 6 relié à un point fixe 7.

L'anneau de charge 5 est équipé d'un contact électrique qui change d'état lorsque l'anneau se déforme au-delà d'une limite prédéterminée, sous l'effet de la tension du câble 4.

Pour effectuer l'étalonnage de l'anneau de charge 5, et vérifier que le contact électrique change d'état à partir d'un poids prédéterminé, on augmente progressivement le couple appliqué au moteur et on lit le poids correspondant sur le peson 6.

On peut alors vérifier que le contact électrique associé à l'anneau de charge 5 change bien d'état lorsque la tension du câble 4 excède une valeur prédéterminée.

Bien entendu, l'invention n'est pas limitée à l'exemple de réalisation qui vient d'être décrit.

On peut notamment ajouter d'autres modes de fonctionnement au variateur.

## Revendications

1. Variateur (1) du type comportant des moyens de commande (8) pour fixer une vitesse de consigne et des moyens de contrôle permettant de mesurer le couple et la vitesse de rotation du moteur, ces moyens de contrôle étant agencés pour déterminer à partir du couple mesuré la vitesse limite de rotation du moteur, de manière à ne pas dépasser une puissance maximale disponible, **caractérisé par le fait que** les moyens de contrôle sont agencés pour effectuer, lorsque la vitesse de consigne est supérieure à la vitesse de rotation nominale (N_{NOM}), des mesures successives du couple, et en cas de variation du couple entre deux mesures successives supérieure un seuil donné, déterminer la nouvelle vitesse limite de rotation,
et **par le fait que** les moyens de contrôle sont agencés pour permettre d'étalonner un anneau de charge (5) en commandant directement le couple du moteur.

2. Variateur selon la revendication précédente, **caractérisé par le fait qu'**une mesure initiale du couple est effectuée en maintenant le moteur à sa vitesse nominale (N_{NOM}) pendant une durée prédéterminée (tₘ).

3. Variateur selon l'une des revendications précédentes, **caractérisé par le fait que** des mesures du couple sont effectuées à chaque fois que la vitesse de rotation reste sensiblement constante au-dessus de la vitesse nominale pendant une durée prédéterminée, de préférence une durée de deux à quatre secondes, de préférence encore trois secondes environ.

4. Variateur selon l'une quelconque des revendications précédentes, **caractérisé par le fait que** lors d'une mesure du couple, les moyens de contrôle effectuent la moyenne, pendant une durée prédéterminée, de préférence entre une et trois secondes, de préférence encore deux secondes environ, du couple instantané.

5. Variateur selon l'une quelconque des revendications précédentes, **caractérisé par le fait que** la nouvelle vitesse limite est calculée dès lors que la variation relative du couple entre deux mesures successives excède 10 %, de préférence 15 %.

6. Variateur selon l'une quelconque des revendications précédentes, **caractérisé par le fait que** le couple du moteur est déterminé par analyse vectorielle.

7. Ensemble comprenant un variateur (1) et un moteur à frein électromagnétique (2), le variateur étant agencé pour débloquer le frein à chaque lancement du moteur, le variateur étant conforme à l'une quelconque des revendications précédentes.

8. Procédé pour étalonner un anneau de charge (5) comportant un contact électrique changeant d'état en cas de dépassement d'un poids prédéterminé, au moyen d'un variateur tel que défini dans l'une quelconque des revendications précédentes, **caractérisé par le fait qu'**il comporte les étapes consistant à :
- accrocher un crochet de grue à un peson (6) lui-même relié à un point fixe (7)
- augmenter le couple du moteur de manière à provoquer le changement d'état de l'anneau de charge (5).

## Claims

1. Variable speed drive (1) of the type including control means (8) for fixing a set point speed and monitoring means for measuring the torque and the rotation speed of the motor, said monitoring means being adapted to determine from the measured torque the limit rotation speed of the motor so as not to exceed a maximum available power, **characterised in that** the monitoring means are adapted, if the set point speed is above the nominal rotation speed (N_{NOM}), to effect successive measurements of the torque and, in the event of variation of the torque between two successive measurements above a given threshold, to determine the new limit rotation speed, and **in that** the monitoring means are adapted to enable calibration of a load ring (5) by direct control of the torque of the motor.

2. Variable speed drive according to the preceding claim, **characterised in that** an initial measurement of the torque is effected with the motor maintained at its nominal speed (N_{NOM}) for a predetermined time (tₘ).

3. Variable speed drive according to either of the preceding claims, **characterised in that** measurements of the torque are effected each time that the rotation speed remains substantially constant above the nominal speed for a predetermined time, preferably for two to four seconds, more preferably for approximately three seconds.

4. Variable speed drive according to any one of the preceding claims, **characterised in that** during a measurement of the torque the monitoring means determine the average instantaneous torque during a predetermined time, preferably one to three seconds, more preferably approximately two seconds.

5. Variable speed drive according to any one of the preceding claims, **characterised in that** the new limit speed is calculated as soon as the relative variation of the torque between two successive measurements exceeds 10%, preferably 15%.

6. Variable speed drive according to any one of the preceding claims, **characterised in that** the torque of the motor is determined by vector analysis.

7. System comprising a variable speed drive (1) and a motor (2) with an electromagnetic brake, the variable speed drive being adapted to release the brake each time the motor is started, the variable speed drive conforming to any one of the preceding claims.

8. Method of calibrating a load ring (5) including an electrical contact changing state in the event of a predetermined weight being exceeded using a variable speed drive as defined in any one of the preceding claims, **characterised in that** it includes the steps of:
- attaching a crane hook to a weighing device (6) itself attached to a fixed point (7), and
- increasing the torque of the motor to cause the load ring (5) to change state.

## Patentansprüche

1. Regler (1) von der Art, die Anweisungsmittel (8) zum Festlegen einer Solldrehzahl und Steuermittel, die das Messen des Moments und der Drehzahl der Rotation des Motors erlauben, umfasst, wobei die Steuermittel dazu ausgelegt sind, ausgehend von dem gemessenen Moment die Grenzdrehzahl für die Rotation des Motors zu bestimmen, so dass eine maximal verfügbare Leistung nicht überschritten wird, **gekennzeichnet dadurch, dass** die Steuermittel dazu ausgelegt sind, aufeinanderfolgende Messungen des Drehmoments vorzunehmen, wenn die Solldrehzahl größer als die Nenndrehzahl (M_{NOM}) ist, und die neue Grenzdrehzahl der Rotation zu bestimmen, falls die Variation des Moments zwischen zwei aufeinanderfolgenden Messungen größer als ein gegebener Schwellwert ist, und **dadurch**, dass die Steuermittel dazu ausgelegt sind, einen Lastring (5) durch direkte Steuerung des Motormoments auszurichten,

2. Regler nach dem vorhergehenden Anspruch, **gekennzeichnet dadurch, dass** eine anfängliche Messung des Moments vorgenommen wird, während der Motor während einer vorgegebenen Zeitdauer (tₘ) bei seiner Nenndrehzahl (N_{NOM}) gehalten wird.

3. Regler nach einem der vorhergehenden Ansprüche, **gekennzeichnet dadurch, dass** die Messungen des Moments jedes Mal dann vorgenommen werden, wenn die Drehzahl während einer vorgegebenen Zeitdauer, vorzugsweise einer Dauer von zwei bis vier Sekunden, besonders vorzugsweise während ungefähr drei Sekunden, im Wesentlichen konstant unter der Nenndrehzahl bleibt.

4. Regler nach einem der vorhergehenden Ansprüche, **gekennzeichnet dadurch, dass** die Steuermittel bei einer Messung des Moments den Mittelwert des momentanen Moments während einer vorgegebenen Zeitdauer, vorzugsweise zwischen einer und drei Sekunden, besonders vorzugsweise während ungefähr zwei Sekunden, bilden.

5. Regler nach einem der vorhergehenden Ansprüche, **gekennzeichnet dadurch, dass** die neue Grenzdrehzahl dann berechnet wird, wenn die relative Variation des Moments zwischen zwei aufeinanderfolgenden Messungen 10%, vorzugsweise 15%, überschreitet.

6. Regler nach einem der vorhergehenden Ansprüche, **gekennzeichnet dadurch, dass** das Motormoment durch Vektoranalysis bestimmt wird.

7. Anordnung, die einen Regler (1) und einen Motor mit elektromagnetischer Bremse (2) umfasst, wobei der Regler dazu ausgelegt ist, die Bremse bei jedem Start des Motors freizugeben, wobei der Regler gemäß einem der vorhergehenden Ansprüche ausgebildet ist,

8. Verfahren zum Ausrichten eines Lastrings (5), der einen elektrischen Kontakt aufweist, der seinen Zustand im Falle des Überschreitens einer vorgegebenen Last ändert, mittels eines Reglers, definiert nach einem der vorhergehenden Ansprüche, **gekennzeichnet dadurch, dass** das Verfahren die folgenden Schritte umfasst:
Befestigen eines Kranhakens an einer Waage (6), die mit einem festen Punkt (7) verbunden ist,
Steigern des Motormoments, so dass eine Zustandsänderung des Lastrings (5) bewirkt wird.
